# NEUE EUROPÄISCHE PATENTSCHRIFT

(11) **EP 1 140 726 B2**
(45) Veröffentlichungstag und Bekanntmachung des Hinweises auf die Entscheidung über den Einspruch: **13.02.2008**
(45) Hinweis auf die Patenterteilung: 27.02.2002
(21) Anmeldenummer: 99936311.2
(22) Anmeldetag: 21.05.1999
(51) Int. Cl.: C04B 14/10, C01B 33/40, E02D 19/18, C04B 28/08

(54) **AKTIVIERTES TONMINERALPULVER, TROCKNUNGSVERFAHREN ZU SEINER HERSTELLUNG UND SEINE VERWENDUNG**
ACTIVATED CLAY MINERAL POWDER, DRYING METHOD FOR PRODUCING THE SAME, AND ITS USE
POUDRE DE MINERAL ARGILEUX ACTIVEE, PROCEDE DE SECHAGE POUR SA FABRICATION ET SON UTILISATION

(30) Priorität: 22.05.1998 DE 19823045; 21.09.1998 DE 19843086
(43) Veröffentlichungstag der Anmeldung: 10.10.2001
(73) Patentinhaber: S & B Industrial Minerals GmbH, 45772 Marl (DE)
(72) Erfinder: BRENNER, Bernd, 80686 München (DE)
(74) Vertreter: Albrecht, Rainer Harald
(86) Internationale Anmeldenummer: PCT/DE1999/001536
(87) Internationale Veröffentlichungsnummer: WO 1999/061388

(56) Entgegenhaltungen:
- EP-A- 0 522 347
- EP-A1- 0 467 483
- EP-A1- 0 696 558
- DE-A- 3 633 736
- DE-C1- 19 506 446
- US-A- 5 521 133
- BENTONIL CV15 Product information, 19-11-1996 Süd-Chemie AG, DE XP002122359
- TIXOTON Product information, 09-1996 Süd-Chemie AG, DE XP002122360
- "Technische Informationen TIXOTON CV15". München: Süd-Chemie AG, ohne Datum, 3S.
- Ullmanns Encyklopädie der technischen Chemie, 4. Auflage, Band 23, 1983, S. 322.
- "Technische Information Erbslöh Aktiv-Bentonit CT". Geisenheim: Erbslöh Geisenheim Industrie-Mineralien GmbH, ohne Datum, 3 S.
- "IBECO AKTIV-BENTONIT CT". IBECO Bentonit-Technologie GmbH, September 1994, 1 S.

## Beschreibung

Die Erfindung betrifft, ein Trocknungsverfahren zur Herstellung von Tonen.

Ein Tonmineralpulver ist zum Beispiel unter dem Handelsnamen TIXOTON CV 15 der Fa. Südchemie, München, oder IBECO Bentonit CR 4 der Fa. IBECO, Mannheim, bekannt.

Die Bedeutung eines derartigen Tonmineralpulvers liegt insbesondere beim Einsatz für Dichtwandmassen. Zur Erzielung der Eigenschaft der Zementstabilität sind die Grundeigenschaften des Abbauminerals, die Verfahrensabläufe bei der Trocknung einschließlich Vermahlung und die Gemengebildung mit Hilfsstoffen entscheidend. Derzeit ist die Erzielung der Zementstabilität an relativ teure Bentonite bestimmter Fundstätten gebunden.

Die Trocknung des Ausgangsminerals erfolgt in bekannten Trocknungsverfahren, z.B. in Horden-, Etagen- oder Trommeltrocknern, zur Vermahlung werden Walzenschüssel-, Kugelmühlen, ggf. Kollergänge eingesetzt.

Nichtzementstabile Bentonite NBF ergeben zusammen mit Zement praktisch keine stabile Suspension bestimmter Viskosität, Fließgrenze und Filtrationseigenschaften. Die Haupteigenschaften suspensionsstabiler Minerale, wie Bentonite, werden durch ihre Morphologie und Ladungsverteilung charakterisiert, wobei eine direkte Zuordnung dieser Eigenschaften zu ihren chemischen Bestandteilen nicht ohne weiteres gelingt, folglich die sicherste Analyse im empirischen Vorgehen mit Erproben im System liegt.

Zur Herstellung von Dichtwandmassen ist es gebräuchlich, Bentonit und Zement plus eventuell Zuschlägen, z.B. Steinmehl oder Adsorbentien, trockengemischt zu halten und zum Einsatz mit Wasser anzurühren (Komponentengemisch in Wasser- oder Einstufenverfahren ESTV). Alternativ werden Bentonit und Wasser vordispergiert, erst dann Zement eingerührt (Einkomponenten in Wasser- oder Zweistufenverfahren ZSTV).

Die im Dichtwandbau einschlägig eingesetzten Bentonite ZBF weisen qualitativ, insbesondere fundstättenmäßig, die oben dargelegte Zementstabilität auf.

Nichtzementstabile Bentonite NBF in Mischung mit jeweils verschiedenen Zementarten zeigen bekanntermaßen keinen einwandfreien Ablauf und entfallen bislang für die Dichtwandanwendung und zwar unabhängig von der generell zumischbaren Zementart. Herkömmliche zementstabile Bentonite ZBF beschränken sich in Mischung auf bestimmte geeignete Zemente. (F steht bei NBF und bei ZBF jeweils als Kürzel für Fundstätte.)

Die heutigen Zementarten von Bedeutung unterscheiden sich im wesentlichen im Anteil von Hüttensand/Hochofenschlacke. Weniger für Dichtwandmischungen geeignete Zemente sind solche mit niedrigem Anteil von Hüttensand (ca. 50 bis 60%) sowie Portlandklinker (ca. 30%). Gut geeignete Zement sind solche mit mehr als 75% Hüttensand bei geringem, ca. 2-3%-igem Klinkeranteil. Nach dem Zementhandbuch ist der aus Zementklinker bestehende Portlandzement (QA3) der am meisten hergestellte. Der speziell für Unterwasserabbindung abgestimmte Hochofenzement (QA2), zum Beispiel HOZ 35 L, enthält über 60% Hochofenschlacke; beim Normzement Traßzement ist äquivalent zum Hüttensand Traß enthalten.

Der getrennt nicht gehandelte Zement (QA1) mit Hochofenschlackenanteil von 20-80% für den einen Ansatz und von 30-60% für den anderen Ansatz in der Trockenmischung mit (zementstabilen) Bentonit wird gemäß DE 36 33 736 A1 zur Herstellung von Dichtwandmassen nach dem o.a. Einstufenverfahren ESTV eingesetzt. Für das o.a. Zweistufenverfahren ZSTV eignen sich der vorgenannte Zement nach DE 36 33 736 A1 sowie der Hochofenzement, allerdings wiederum nur in Bezug auf die bekannten zementstabilen Bentonite. Ungeeignet stellen sich Portlandzement QA3 bei den Verfahren ESTV; ZSTV und Hochofenzement QA2 beim Verfahren ESTV dar.

Die der Erfindung zugrunde liegende Aufgabe ist, ein Trocknungsverfahren so zu verändern, daß ein mikroporöser Feingrieß mit definierten Materialeigenschaften resultiert, der Zementstabilität aufweist und mit verschiedenen Zementarten einwandfreie Dichtwandmassen bildet.

Die Lösung der Aufgabe ist in den Ansprüchen angegeben. Die Unteransprüche geben Ausgestaltungen des erfindungsgemäßen Trocknungsverfahrens wieder.

Der Anwendungsbereich bezieht sich auf zementbasierte Dichtwandmassen; zementbasierte Schadstoffeinbettmassen; quellzeitreduzierte leicht dispergierbare Schlitzwandbentonite; staubreduzierte Quellbentonite für Mixed-on-site-Applikationen (Teich- und Deponiebasisabdichtung); Vorprodukte für hochverdichtete Bentonite; Dichtmatten.

Mit einem schockgetrockneten, speziell vermahlenen und dadurch mikroporös gewordenen Fein-/Feinstgrieß ZBFM aus lagerstättenbedingt zementstabilem Bentonit ZBF können Dichtwandmassen mit eigentlich dafür nicht geeigneten Zementen, z.B. QA3, hergestellt werden. Dieser Feinstgrieß NBFM aus lagerstättenbedingt nichtzementstabilem Bentonit NBF wandelt sich zu einer Qualität, wie sie der lagerstättenbedingt zementstabile Bentonit ZBF ursprünglich aufweist.

### (M steht jeweils als Kürzel für Mikroporosität.)

Der erzielte mikroporöse Feingrieß ZBFM, NBFM weist in der Trockenmischung mit Zement eine Lagerstabilität auf, bei der von mindestens sieben Tagen ausgegangen werden kann, wobei unterhalb von ca. 30 Tagen ebenso keine wesentliche Werteveränderung eintritt. Der Grieß zeichnet sich dadurch aus, daß das Partikel mit seiner geringen Oberfläche wenig Angriff für den reaktiven Zement bietet und die innere Oberfläche aufgrund großer Mikroporosität schnellen Dispergierablauf gewährleistet.

Als Vorteil der erfindungsgemäßen Darstellung des Feingrießes ZBFM, NBFM zeigt sich, daß die Schnittverhältnisse hoch liegen, d.h. die Grießfraktion einen hohen Massenanteil erreicht, jedoch eng verteilt bleibt. Der Feingrieß weist günstige Eigenschaften auf hinsichtlich seiner Quelleigenschaften, Dispergierbarkeit, was die Aufteilung in die Primärteilchen des Tones in Wasser betrifft, Pulverfluidität und Lagerstabilität.

Für den Vermahlungsprozeß gelten:
Eingangskörnung ca 5-20 mm;
Grießkorn nach Vermahlung ca. 0,025-0,1 mm.

Die Dichte des herstellungsgemäßen Grießes ZBFM, NBFM beträgt ca. 900 bis 1200 kg/m³. Der Wassergehalt beläuft sich auf 7-12%. Für den Na₂O-Gehalt gelten 0,5-3,5%. Die angegebenen Bereiche sind Nennbereiche, engere Bereichswerte sind jeweils eingeschlossen, ebenso sind Werte außerhalb der Bereichsgrenzen z.B. durch geeignete verfahrenstechnische Maßnahmen realisierbar.

Der Trocknungsprozeß wird mit hoher Trockengeschwindigkeit, vergleichbar mit einer Schocktrocknung, geführt, wobei im wesentlichen folgende Parameterwerte zugrundezulegen sind:
- Eingangswert Gruben, -Lagerfeuchte 30-42%;
- Restfeuchte 16-22%;
- Verdampfungsleistung min. 0,2 kg Wasser/(kg Bentonit und min) ;
- bei Gleichstromtrocknung Eingangstemperatur ca. ab 300-700°C (Trommeltrockner);
- bei Mühlentrocknung ca 40 bis ca. 110°C bei hoher Luftmenge,
- bei Querstromtrocknung ab 100-300°C;
- Ausgangstemperatur kleiner/gleich 85°C.

Die innere Guttemperatur soll möglichst 60°C für längere Zeit nicht überschreiten, um irreversible Veränderungenin der Morphologie des Minerals zu vermeiden.

Vermahlung und Trocknung können in einer geeigneten Mühle, z.B. einer Ultrarotormühle, kombiniert durchgeführt werden. Die Verweilzeit in der Mühle ist kürzest einzustellen, so daß die gewünschte Mahlfeinheit ohne zu lange Einwirkung auf das Partikel erreicht wird, was einen niederen Kreislauffaktor impliziert. Eine Pulverfeinheit, die in der Größenordnung der Mikroporosität liegt, ist auch wegen der Gefahr der Übertrocknung bei gleichzeitiger Morphologiezerstörung zu vermeiden. (Sämtliche Angaben von Feuchtigkeitswerten beziehen sich nach DIN bezüglich Ofentrocknung bei 105°C bis Gewichtskonstanz.)

Üblicherweise wird das Mahlgut durch Sichtung in oder direkt nach der Mühle aufgetrennt in den Anteil mit gewünschter Kornfeinheit und das noch zu grobe, wieder rückzuführende Material. Dadurch befindet sich letzeres in einem unbestimmt langen Kreislauf. Bei einem dem Mahlvorgang überlagerten Trocknungsvorgang wird das zirkulierende Material übermäßig getrocknet, was bei smektitischen Tonen zur Folge hat, daß diese übertrocknete Teilfraktion nicht mehr genügend in Wasser dispergierbar/benetzbar ist und in den wichtigsten Anwendungsgebieten untauglich wird.

Bei Führung in der Ultrarotormühle wird das Material aufgesplittet, und das grobe, ansonsten rezirkulierende Material der Nutzfraktion zugeordnet.

Drehzahl, Anzahl und Ausbildung der Mahlkörper zusammen mit der Mahlbahn bestimmen den Schnitt. Es ist das Ziel, grobes Spritzkorn zu vermeiden, das der Wiedervermahlung im Kreislauf bedarf.

Das nach dem erfindungsgemäßen Verfahren dargestellte Feinmineralpulver ZBFM ist herstellablauffähig für Dichtwandmassen bezüglich der Zementarten QA1, QA2 im Einstufen (ESTV)- sowie im Zweistufenverfahren (ZSTV), die Gängigkeit liegt auch für Portlandzement, Zementart QA3, im Zweistufenverfahren vor. Feinmineralpulver NBFM, aus fundstättenbedingt nichtzementstabilem NBF gewonnen, eignet sich wie ein herkömmlich zementstabiler Bentonit ZBF für den Dichtwandbau, wie oben im Zusammenhang mit den Mischverfahren und Zementarten für den Stand der Technik dargelegt. Die Bentonitqualität NBF wird somit auf die Verarbeitungsstufe ZBF in Form des ZBFM gehoben.

Das dargestellte Feinmaterialpulver ZBFM, NBFM eignet sich zur Zementvergütung bei Estrich- und Spritzbeton.

Das Feinmineralpulver ZBFM, NBFM zeigt eine für die Anwendung notwendige erhöhte Lagerstabilität in Trockenmischung mit hydraulisch abbindendem Bindemittel, ebenso ist es aufgrund der Mikroporosität leicht dispergierbar.

Es folgt eine Darstellung des nach dem erfindungsgemäßen Verfahren gewonnenen Tonmineralpulvers anhand von Meßprotokollen. Es zeigen:
- Tab. 1: Kennwerte zur Zementstabilität verschiedener Proben;
- Tab. 2: Kennwerte über Suspensionseigenschaften von in Wasser dispergierten Proben bezüglich des Zeitverlaufes;
- Tab. 3: Kennwerte wie in Tab. 2, jedoch bezüglich Trocknungsverfahrens;
- Figur 1: Partikelgrößenverteilungsanalyse von handelsüblichem Bentonit;
- Figur 2: wie Figur 1, jedoch von erfindungsgemäßem Bentonit.

In Tab. 1 geben die jeweils mit B1 bzw. B2 bezeichneten Zeilen Meßwerte für die Rheologie von Dichtwandmassen an, die sofort nach Trockenmischen von Zement und Bentonit mit Wasser hergestellt werden, im Vergleich zu Trockenmischungen, die vor Herstellung der Dichtwandmasse sieben Tage trocken gelagert waren. Die Zeile B1 bezieht sich auf den zweistufig, nicht erfindungsgemäß hergestellten Bentonit J27, B2 hingegen auf dasselbe Ausgangsmaterial J29, das auf denselben Maschinen, jedoch in herkömmlicher Verfahrensweise, hergestellt wurde. Das Material J27 zeigt beim Vergleich der Werte in den Spalten unter "Sofort" und "7d" nahezu unveränderte Werte, was die erhöhte Lagerstabilität beweist. Das Material J29 erreicht nicht die geforderte Verarbeitungsviskosität, siehe Marsh-Zahl und Fließgrenze, und verliert sogar durch Lagerung sein ursprüngliches Viskositätsniveau.

Tab. 2 ist ähnlich wie Tab. 1 aufgebaut. Sie bezieht sich jedoch auf die Rheologie des Tonmaterials in Wasser dispergiert ohne Zement. Die Zeile C1 gibt die Verhältnisse vom herkömmlich fein vermahlenen, schockgetrockneten, die Zeile C2 demgegenüber vom erfindungsgemäßen, jedoch grob vermahlenen und schockgetrockneten Tonmaterial wieder. Laut Zeile C2 wird ersichtlich, daß die Grießfraktion mikroporös ist, weil die zeitliche Entwicklung der Suspensionsrheologie von "Sofort" über "1h" nach "24h" im Vergleich zu den Werten in Zeile C2 die gleiche, sogar etwas höhere Geschwindigkeit zeigt. Zu erwarten wäre nämlich, daß bei Material nach Zeile C2 eine verzögerte Entwicklung der Suspensionsrheologie abläuft.

Tab. 3 enthält dieselbe Darstellung wie Tab. 2 bezüglich der zeitlichen Entwicklung der Suspensionsrheologie, wobei Zeile D1 das normal getrocknete und gemahlene Material und Zeile D2 das Material J27 betrifft. Unter normal getrocknet und gemahlen ist Vortrocknung bis herunter auf 14% Feuchte und Mahltrocknung auf einer Walzenschüsselmühle bis 8% Restfeuchte zu verstehen. Aus Zeile D1 geht hervor, daß das Material als Schlitzwandbentonit nicht verwendbar ist, während das Material gemäß Zeile D2 ausgezeichnete, sehr hohe rheologische Werte zeigt, die gewöhnlich nur mit teuren ausgesuchten Bentoniten oder mittels Zuschlägen erzielbar sind.

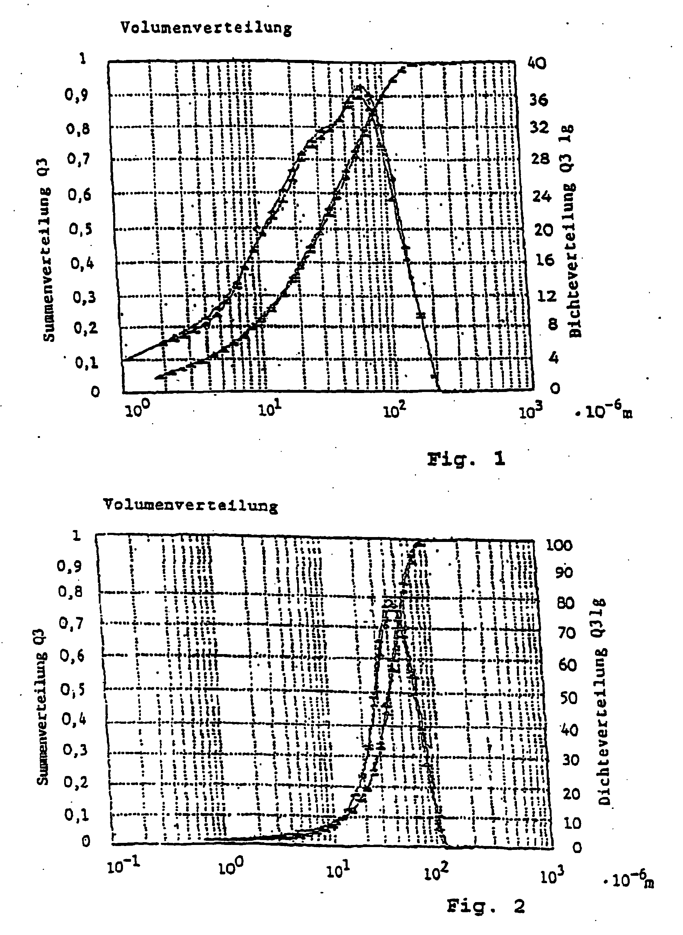

Die Figuren 1, 2 sind gleich aufgebaut. Sie beziehen sich jeweils auf eine Liste der untersuchten Korngrößendurchmesser X0/mym gegenüber ihrem Anteil Q3 in Prozent am Gesamtvolumen aller Kornanteile. Diese Liste ist Basis für die Summenkurve der Volumenverteilung sowie Häufigkeitsverteilung der Korndurchmesser.

Beim Vergleich der Figuren 1 und 2 ist erkennbar, daß handelsüblicher Bentonit, siehe Figur 1, in der Korngröße breiter verteilt ist und einen hohen Feinanteil enthält, während das erfindungsgemäße Material, siehe Figur 2, im wesentlichen ohne Feinanteil eng verteilt mit einem Maximum bei 0,06 mm beschaffen ist. Aus Zeile A1/Erläuterung zu Fig. 1 bzw. Zeile A2/Erläuterung zu Fig. 2 sind Werte zur spezifischen Oberfläche pro Kornvolumen entnehmbar. Dabei zeigt sich die unterschiedliche Feinheit im Wert 0,63 m²/cm³, siehe Zeile A1, gegenüber dem Wert von 0,36 m²/cm³, siehe Zeile A2.

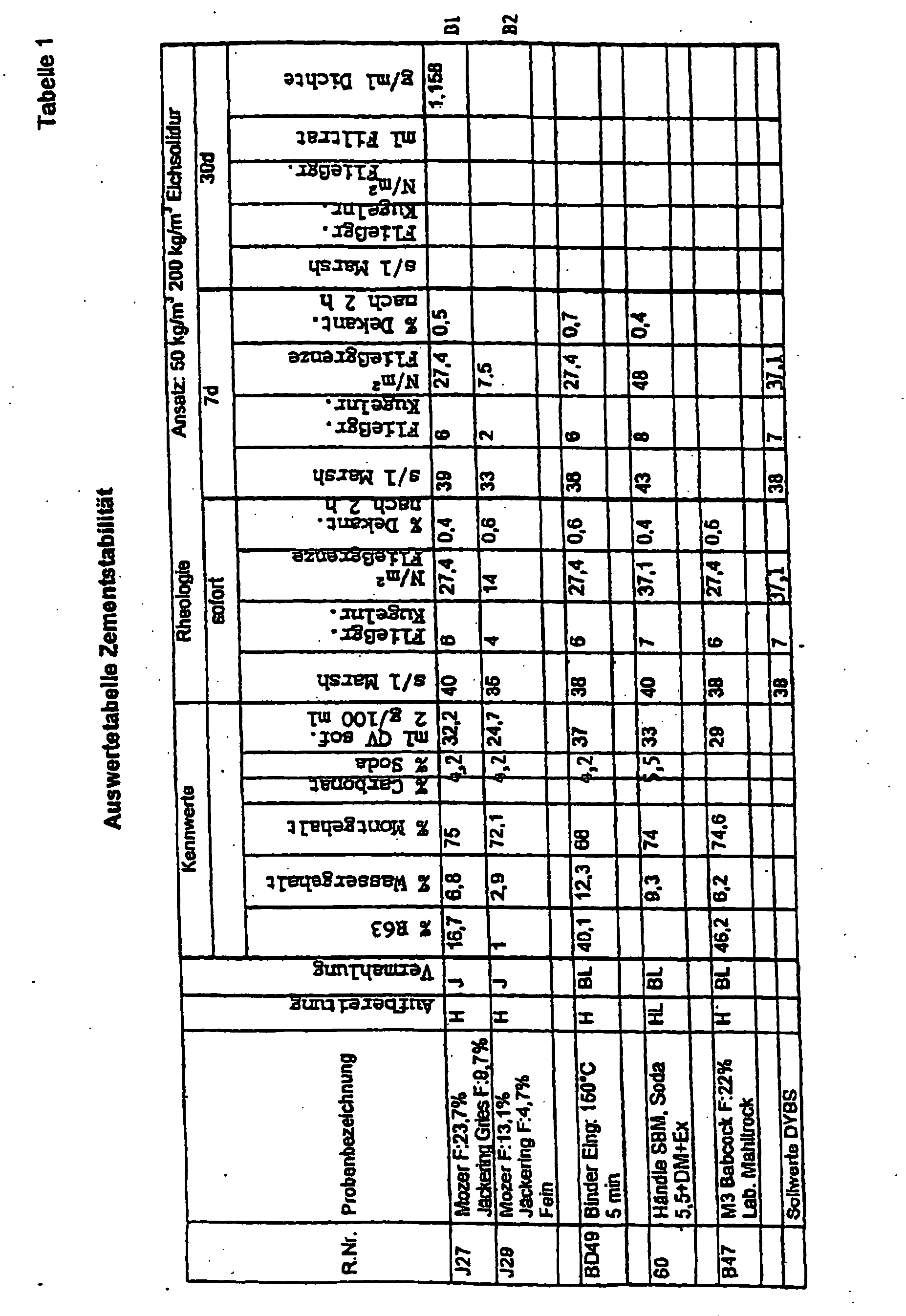

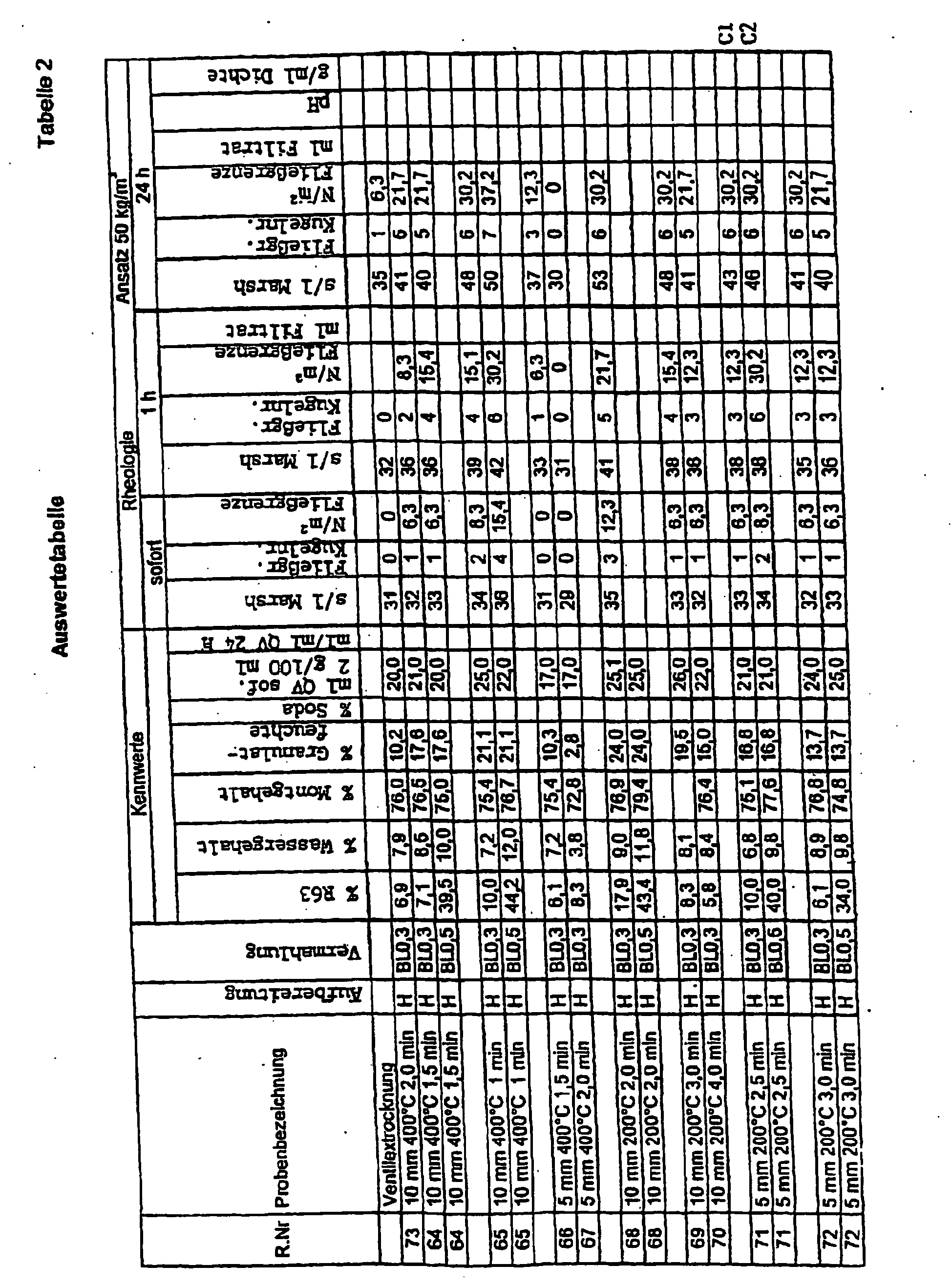

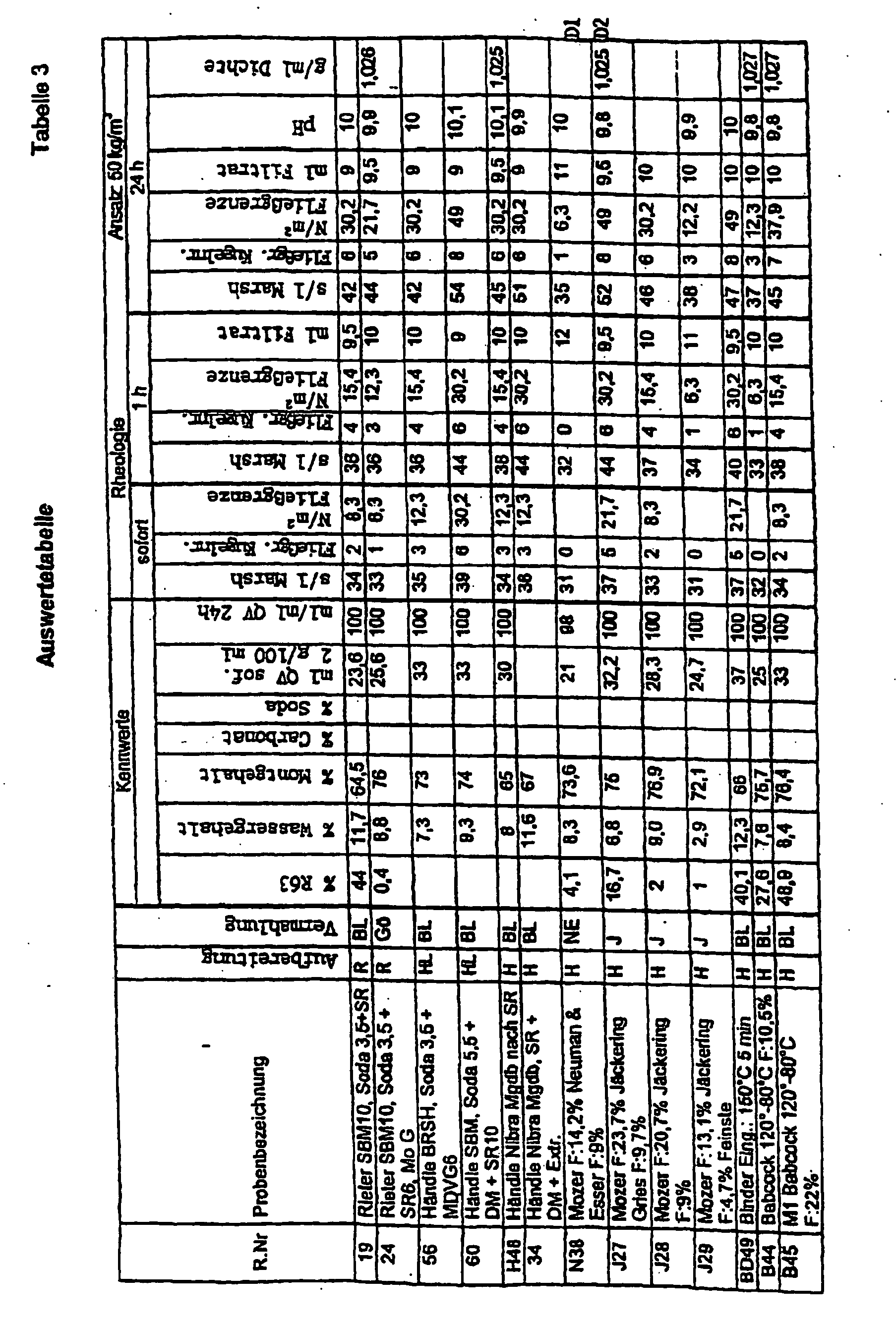

### Erläuterung zu Fig. 1:

### SYMPATEC HELOS PARTIKELGRÖSSENANALYSE

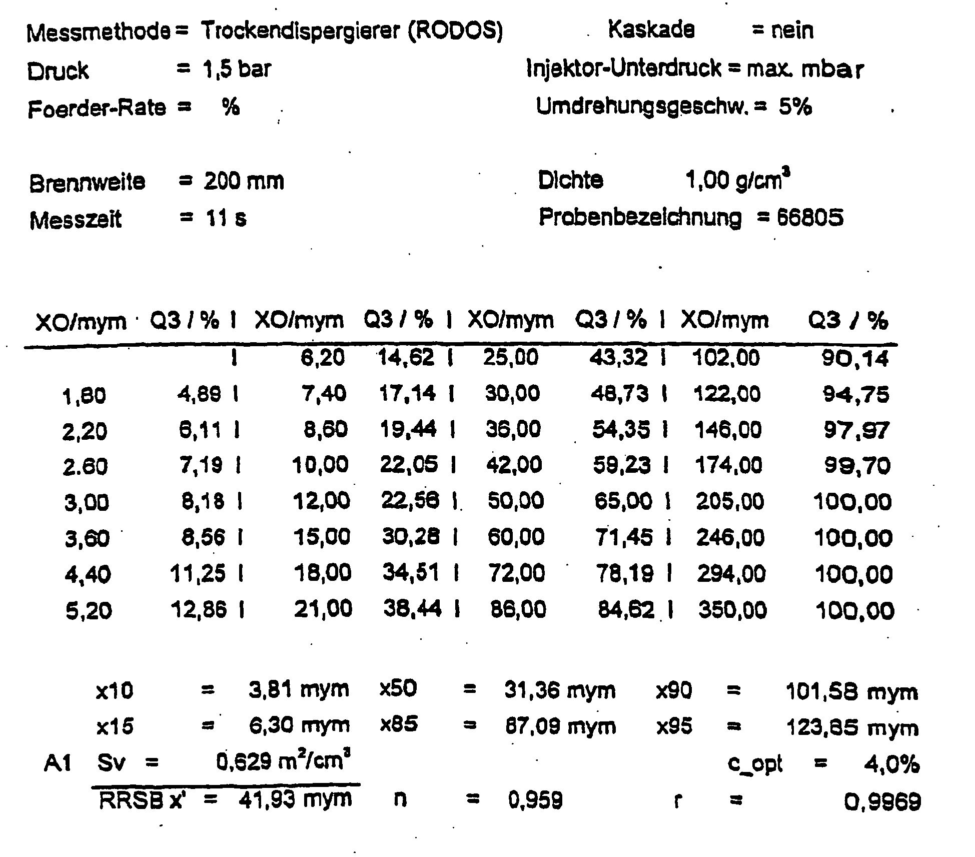

### Erläuterung zu Fig. 2:

### SYMPATEC HELOS PARTIKELGRÖSSENANALYSE

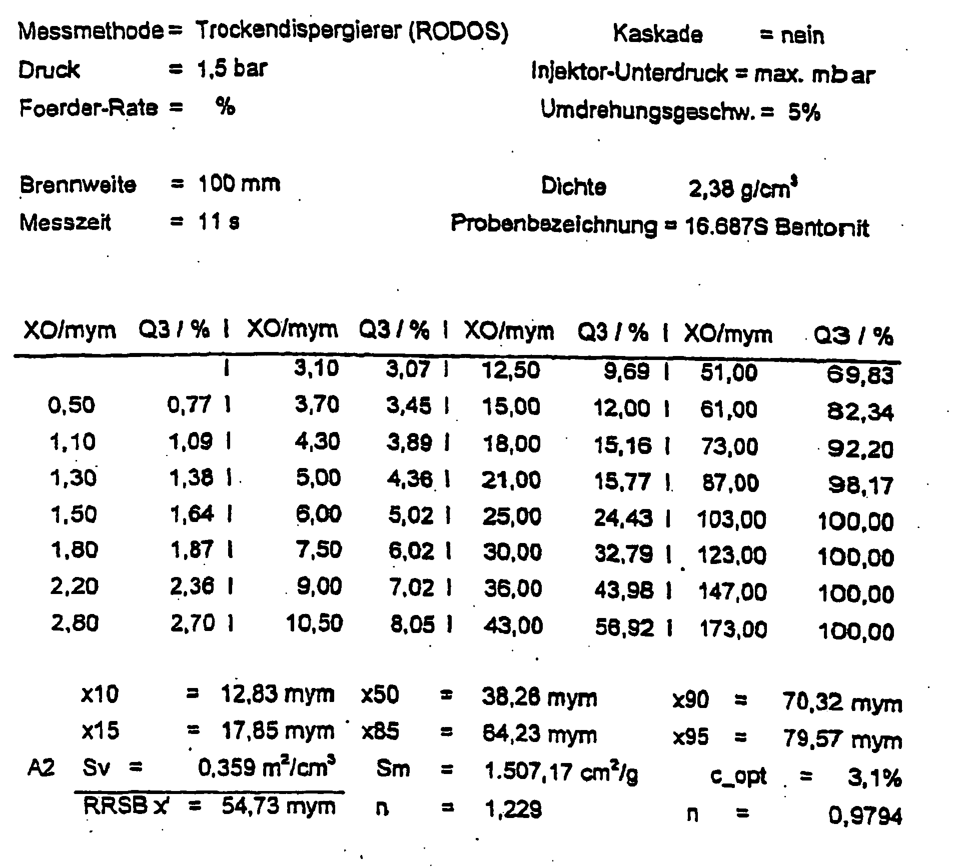

## Patentansprüche

1. Verfahren zur Schocktrocknung von ausgangsfeuchten smektitischen Tonen auf eine bestimmte Endfeuchte, **dadurch gekennzeichnet, dass** die Feuchteabfuhr bei geringer Verweilzeit von weniger als 15 min. im Trockner bei einer Guttemperatur von ≤ 85°C unter Sprengung sowie Lockerung der ursprünglichen Mikrostruktur erfolgt, wobei
- bei einstufigem Trocknungs- und Vermahlungsvorgang von der Anfangsfeuchte von 30-42 % auf die Endfeuchte von 7-12 % getrocknet wird, und wobei der Trocknungsvorgang bei einer Verdampfungsleistung von minimal 0,2 kg Wasser pro kg Bentonit und Minute durchgeführt wird.

2. Verfahren nach Anspruch 1, **dadurch gekennzeichnet, dass** Tone mit einer Ausgangskörnung im Bereich von 5-20 mm eingesetzt werden.

3. Verfahren nach Anspruch 1 oder 2, **dadurch gekennzeichnet, dass** die Tone durch Gleichstromtrocknung bei einer Eingangstemperatur von 300-700°C und einer Ausgangstemperatur ≤ 85°C getrocknet werden.

4. Verfahren nach Anspruch 1 oder 2, **dadurch gekennzeichnet, dass** die Tone durch Querstromtrocknung bei einer Eingangstemperatur von 100-300°C und einer Ausgangstemperatur ≤ 85°C getrocknet werden.

5. Verfahren nach Anspruch 1 oder 2, **dadurch gekennzeichnet, dass** die Tone durch Mühlentrocknung ab 80°C bei hoher Luftmenge und einer Austrittstemperatur ≤ 85°C getrocknet werden.

6. Verfahren nach einem der Ansprüche 1 oder 2 und 5, **dadurch gekennzeichnet, dass** die Tone mit kombiniertem Vermahlungsvorgang in einer Ultrarotormühle, die auf einen Korngrößenbereich von 0,02-0,1 mm eingestellt wird, getrocknet werden.

## Claims

1. A method for the shock drying of initially moist smectite clays to a defined final moisture content, **characterised in that** the discharge of moisture takes place during a short holding time of less than 15 mins. in the dryer at a material temperature of ≤ 85°C, with bursting and loosening of the original microstructure, wherein
- drying is carried out in a single-stage drying and milling process from the initial moisture content of 30-42% to the final moisture content of 7-12%, and wherein
- the drying process is carried out at an evaporation output of a minimum of 0.2 kg of water per kg of bentonite and minute.

2. The method according to Claim 1, **characterised in that** clays with an initial granulation ranging from 5 to 20 mm are used.

3. The method according to Claim 1 or 2, **characterised in that** the clays are dried by parallel flow drying at an inlet temperature of 300-700°C and an outlet temperature of ≤ 85°C.

4. The method according to Claim 1 or 2, **characterised in that** the clays are dried by transverse flow drying at an inlet temperature of 100-300°C and an outlet temperature of ≤ 85°C.

5. The method according to Claim 1 or 2, **characterised in that** the clays are dried by mill drying from 80°C with a high air flow and an outlet temperature of ≤ 85°C.

6. The method according to one of Claims 1 or 2 and 5, **characterised in that** the clays are dried with a combined milling process in an ultra-rotor mill which is set to a grain size range of 0.02 - 0.1 mm.

## Revendications

1. Procédé de séchage par choc d'argiles smectiques avec une humidité initiale à une humidité finale déterminée, **caractérisé en ce que** l'élimination de l'humidité a lieu avec une faible durée de séjour de moins de 15 minutes dans le séchoir, à une température de matière inférieure ou égale à 85 °C par explosion ainsi que par relâchement de la microstructure initiale, dans lequel
- avec un processus de broyage et de séchage en une seule étape, on sèche de l'humidité initiale de 30-42 % à l'humidité finale de 7-12 %, et dans lequel on effectue l'étape de séchage avec une puissance d'évaporation d'au minimum 0,2 kg d'eau par kg de bentonite et par minute.

2. Procédé selon la revendication 1, **caractérisé en ce qu'**on utilise des argiles présentant une granulométrie initiale dans la plage de 5-20 mm.

3. Procédé selon la revendication 1 ou 2, **caractérisé en ce que** les argiles sont séchées par un séchage à débit constant à une température d'entrée de 300-700 °C et une température de sortie inférieure ou égale à 85 °C.

4. Procédé selon la revendication 1 ou 2, **caractérisé en ce que** les argiles sont séchées par un séchage à flux transversal à une température d'entrée de 100-300 °C et une température de sortie inférieure ou égale à 85 °C.

5. Procédé selon la revendication 1 ou 2, **caractérisé en ce que** les argiles sont séchées par un séchage en moulin à partir de 80 °C avec une quantité d'air élevée et une température de sortie inférieure ou égale à 85 °C.

6. Procédé selon l'une des revendications 1 ou 2 et 5, **caractérisé en ce que** les argiles sont séchées par un processus de broyage combiné dans un broyeur à ultrarotor qui est réglé à une plage de dimensions de grains de 0,02-0,1 mm.
